# EUROPEAN PATENT APPLICATION

(11) **EP 4 443 803 A1**
(43) Date of publication of application: **09.10.2024**
(21) Application number: 24168302.8
(22) Date of filing: 03.04.2024
(51) Int. Cl.: H04L 5/00, H04W 56/00, H04W 72/1268

(54) **MULTIPLE TIMING ADVANCE OPERATION**

(30) Priority: 03.04.2023 US 202363456665 P
(71) Applicant: Nokia Technologies Oy, 02610 Espoo (FI)
(72) Inventor: KOSKELA, Timo, 90670 Oulu (FI); HAKOLA, Sami-Jukka, 90450 Kempele (FI); KARJALAINEN, Juha Pekka, 88600 Sotkamo (FI)
(74) Representative: Script Intellectual Property LLP

(57) **Abstract**

Systems, methods, apparatuses, and computer program products for facilitating triggered PDCCH-ordered PRACH transmissions in multi-TRP scenarios. One method may include a UE determining that a first TCI state is to be applied in a first slot and a second TCI state is to be applied in a second slot. The first TCI state is associated with a first TAG ID, a second TCI state is associated with a second TAG ID different than the first TAG ID, and the second slot is succeeding and adjacent to the first slot. The method may further include, based upon the determining, transmitting or dropping at least one of at least one uplink transmission in the first slot or at least one uplink transmission in a second slot.

## Description

### TECHNICAL FIELD:

Some example embodiments may generally relate to mobile or wireless telecommunication systems, such as 3^{rd} Generation Partnership Project (3GPP) Long Term Evolution (LTE), 5^{th} generation (5G) radio access technology (RAT), new radio (NR) access technology, 6^{th} generation (6G), and/or other communications systems. For example, certain example embodiments may relate to systems and/or methods for facilitating triggered physical downlink control channel (PDCCH) ordered physical random access channel (PRACH) transmissions in multi-transmission reception point (TRP) scenarios.

### BACKGROUND:

Examples of mobile or wireless telecommunication systems may include radio frequency (RF) 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine-type communication (mMTC). NR is expected to deliver extreme broadband, ultra-robust, low-latency connectivity, and massive networking to support the Internet of Things (IoT). The next generation radio access network (NG-RAN) represents the radio access network (RAN) for 5G, which may provide radio access for NR, LTE, and LTE-A. It is noted that the nodes in 5G providing radio access functionality to a user equipment (UE) (e.g., similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio.

### SUMMARY:

In accordance with some example embodiments, a method may include determining, by a user equipment, that a first transmission configuration indicator state is to be applied in a first slot and a second transmission configuration indicator state is to be applied in a second slot. The first transmission configuration indicator state is associated with a first timing advance group identifier, a second transmission configuration indicator state is associated with a second timing advance group identifier different than the first timing advance group identifier, and the second slot is succeeding and adjacent to the first slot. The method may further include, based upon the determining, transmitting or dropping at least one of at least one uplink transmission in the first slot or at least one uplink transmission in a second slot.

In accordance with certain example embodiments, an apparatus may include means for determining that a first transmission configuration indicator state is to be applied in a first slot and a second transmission configuration indicator state is to be applied in a second slot. The first transmission configuration indicator state is associated with a first timing advance group identifier, a second transmission configuration indicator state is associated with a second timing advance group identifier different than the first timing advance group identifier, and the second slot is succeeding and adjacent to the first slot. The apparatus may further include means for, based upon the determining, transmitting or dropping at least one of at least one uplink transmission in the first slot or at least one uplink transmission in a second slot.

In accordance with various example embodiments, a non-transitory computer readable medium may include program instructions that, when executed by an apparatus, cause the apparatus to perform at least a method. The method may include determining that a first transmission configuration indicator state is to be applied in a first slot and a second transmission configuration indicator state is to be applied in a second slot. The first transmission configuration indicator state is associated with a first timing advance group identifier, a second transmission configuration indicator state is associated with a second timing advance group identifier different than the first timing advance group identifier, and the second slot is succeeding and adjacent to the first slot. The method may further include, based upon the determining, transmitting or dropping at least one of at least one uplink transmission in the first slot or at least one uplink transmission in a second slot.

In accordance with some example embodiments, a computer program product may perform a method. The method may include determining that a first transmission configuration indicator state is to be applied in a first slot and a second transmission configuration indicator state is to be applied in a second slot. The first transmission configuration indicator state is associated with a first timing advance group identifier, a second transmission configuration indicator state is associated with a second timing advance group identifier different than the first timing advance group identifier, and the second slot is succeeding and adjacent to the first slot. The method may further include, based upon the determining, transmitting or dropping at least one of at least one uplink transmission in the first slot or at least one uplink transmission in a second slot.

In accordance with certain example embodiments, an apparatus may include at least one processor and at least one memory storing instructions that, when executed by the at least one processor, cause the apparatus at least to determine that a first transmission configuration indicator state is to be applied in a first slot and a second transmission configuration indicator state is to be applied in a second slot. The first transmission configuration indicator state is associated with a first timing advance group identifier, a second transmission configuration indicator state is associated with a second timing advance group identifier different than the first timing advance group identifier, and the second slot is succeeding and adjacent to the first slot. The at least one memory and instructions, when executed by the at least one processor, may further cause the apparatus at least to, based upon the determining, transmit or drop at least one of at least one uplink transmission in the first slot or at least one uplink transmission in a second slot.

In accordance with various example embodiments, an apparatus may include determining circuitry configured to determine that a first transmission configuration indicator state is to be applied in a first slot and a second transmission configuration indicator state is to be applied in a second slot. The first transmission configuration indicator state is associated with a first timing advance group identifier, a second transmission configuration indicator state is associated with a second timing advance group identifier different than the first timing advance group identifier, and the second slot is succeeding and adjacent to the first slot. The apparatus may further include transmitting or dropping circuitry configured to, based upon the determining, transmit or drop at least one of at least one uplink transmission in the first slot or at least one uplink transmission in a second slot.

In accordance with some example embodiments, a method may include determining, by a network entity, that a first transmission configuration indicator state is to be applied in a first slot and a second transmission configuration indicator state is to be applied in a second slot. The first transmission configuration indicator state is associated with a first timing advance group identifier, a second transmission configuration indicator state is associated with a second timing advance group identifier different than the first timing advance group identifier, and the second slot is succeeding and adjacent to the first slot. The method may further include, based upon the determining, blocking scheduling of and expecting of at least one uplink transmission at least one of at least one uplink transmission in the first slot or at least one uplink transmission in a second slot.

In accordance with certain example embodiments, an apparatus may include means for determining that a first transmission configuration indicator state is to be applied in a first slot and a second transmission configuration indicator state is to be applied in a second slot. The first transmission configuration indicator state is associated with a first timing advance group identifier, a second transmission configuration indicator state is associated with a second timing advance group identifier different than the first timing advance group identifier, and the second slot is succeeding and adjacent to the first slot. The apparatus may further include means for, based upon the determining, blocking scheduling of and expecting of at least one uplink transmission at least one of at least one uplink transmission in the first slot or at least one uplink transmission in a second slot.

In accordance with various example embodiments, a non-transitory computer readable medium may include program instructions that, when executed by an apparatus, cause the apparatus to perform at least a method. The method may include determining that a first transmission configuration indicator state is to be applied in a first slot and a second transmission configuration indicator state is to be applied in a second slot. The first transmission configuration indicator state is associated with a first timing advance group identifier, a second transmission configuration indicator state is associated with a second timing advance group identifier different than the first timing advance group identifier, and the second slot is succeeding and adjacent to the first slot. The method may further include, based upon the determining, blocking scheduling of and expecting of at least one uplink transmission at least one of at least one uplink transmission in the first slot or at least one uplink transmission in a second slot.

In accordance with some example embodiments, a computer program product may perform a method. The method may include determining that a first transmission configuration indicator state is to be applied in a first slot and a second transmission configuration indicator state is to be applied in a second slot. The first transmission configuration indicator state is associated with a first timing advance group identifier, a second transmission configuration indicator state is associated with a second timing advance group identifier different than the first timing advance group identifier, and the second slot is succeeding and adjacent to the first slot. The method may further include, based upon the determining, blocking scheduling of and expecting of at least one uplink transmission at least one of at least one uplink transmission in the first slot or at least one uplink transmission in a second slot.

In accordance with certain example embodiments, an apparatus may include at least one processor and at least one memory storing instructions that, when executed by the at least one processor, cause the apparatus at least to determine that a first transmission configuration indicator state is to be applied in a first slot and a second transmission configuration indicator state is to be applied in a second slot. The first transmission configuration indicator state is associated with a first timing advance group identifier, a second transmission configuration indicator state is associated with a second timing advance group identifier different than the first timing advance group identifier, and the second slot is succeeding and adjacent to the first slot. The at least one memory and instructions, when executed by the at least one processor, may further cause the apparatus at least to, based upon the determining, block scheduling and expecting of at least one uplink transmission at least one of at least one uplink transmission in the first slot or at least one uplink transmission in a second slot.

In accordance with various example embodiments, an apparatus may include determining circuitry configured to determine that a first transmission configuration indicator state is to be applied in a first slot and a second transmission configuration indicator state is to be applied in a second slot. The first transmission configuration indicator state is associated with a first timing advance group identifier, a second transmission configuration indicator state is associated with a second timing advance group identifier different than the first timing advance group identifier, and the second slot is succeeding and adjacent to the first slot. The apparatus may further include blocking circuitry configured to, based upon the determining, block scheduling and expecting of at least one uplink transmission at least one of at least one uplink transmission in the first slot or at least one uplink transmission in a second slot.

### BRIEF DESCRIPTION OF THE DRAWINGS:

For a proper understanding of example embodiments, reference should be made to the accompanying drawings, wherein:
FIG. 1 illustrates an example of beam application time.
FIG. 2 illustrates an example of a UE applying a new transmission configuration indicator state;
FIG. 3 illustrates an example of a signaling diagram according to certain example embodiments;
FIG. 4 illustrates an example of a flow diagram of a method that may be performed by a user equipment according to various example embodiments;
FIG. 5 illustrates an example of a flow diagram of a method that may be performed by a network entity according to some example embodiments;
FIG. 6 illustrates an example of a signaling diagram according to certain example embodiments;
FIG. 7 illustrates an example of a time when a new transmission configuration indicator state is applied in case a timing advance associated to new transmission configuration indicator state is larger than the one associated to a previous transmission configuration indicator state.
FIG. 8 illustrates an example of a flow diagram of a method that may be performed by a user equipment according to various example embodiments;
FIG. 9 illustrates an example of a flow diagram of a method that may be performed by a network entity according to some example embodiments;
FIG. 10 illustrates an example of various network devices according to various example embodiments; and
FIG. 11 illustrates an example of a 5G network and system architecture according to certain example embodiments.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for facilitating triggered PDCCH-ordered PRACH transmissions in multi-TRP scenarios is not intended to limit the scope of certain example embodiments, but is instead representative of selected example embodiments.

Using a unified transmission configuration indicator (TCI) framework, a UE may be configured with a list of TCI state identifiers (IDs) that may be activated using a medium access control (MAC) control element (CE). TCI states activated by the MAC CE may be indicated using a downlink control indicator (DCI)-based beam indication. In this way, each TCI may be mapped to a code point. Using a unified TCI state framework for multiple-DCI (M-DCI) operation (*i.e*., multiple TRP operations), the TCI states may be activated per control resource set (CORESET) *PoolIndex.*

Unified TCI state activation/deactivate MAC CE may be identified by a MAC subheader with extended logical channel identifier (eLCID). A MAC CE may have a variable size with multiple parameters, such as shown in the following table:

| | | | | | | | | |
|---|---|---|---|---|---|---|---|---|
| R | Serving Cell ID | | | | | DL BWP ID | | Octet 1 |
| R | R | R | R | R | R | UL BWP ID | | Octet 2 |
| P₁ | P₂ | P₃ | P₄ | P₅ | P₆ | P₇ | P₈ | Octet 3 |
| D/U | TCI state ID 1 | | | | | | | Octet 4 |
| D/U | TCI state ID 2 | | | | | | | Octet 5 |
| ... | | | | | | | | |
| D/U | TCI state ID N | | | | | | | Octet N+3 |

For example, a MAC CE may include a serving cell ID that indicates the identity of the serving cell for which the MAC CE applies. The length of the field may be 5 bits. If the indicated serving cell is configured as part of a *simultaneousU-TCI-UpdateList1, simultaneousU-TCI-UpdateList2*, *simultaneousU-TCI-UpdateList3* and/or *simultaneousU-TCI-UpdateList4,* this MAC CE may apply to all the serving cells in the set *simultaneousU-TCI-UpdateList1, simultaneous U-TCI- UpdateList2, simultaneous U- TCI- UpdateList3* or *simultaneousU-TCI-UpdateList4,* respectively.

A MAC CE may also include a downlink (DL) bandwidth part (BWP) ID that indicates a DL BWP for which the MAC CE applies as the codepoint of the DCI bandwidth part indicator field. The length of the BWP ID field may be 2 bits. Additionally or alternatively, a MAC CE may include an uplink (UL) BWP ID indicating a UL BWP for which the MAC CE applies as the codepoint of the DCI bandwidth part indicator field. The length of the BWP ID field may be 2 bits.

The MAC CE may also include a Pᵢ field indicating whether each TCI codepoint has multiple TCI states or single TCI state. For example, Pᵢ set to 1 may indicate that an i^{th} TCI codepoint includes the DL TCI state and the UL TCI state. Pᵢ set to 0 may indicate that an i^{th} TCI codepoint includes only the DL/joint TCI state or the UL TCI state. The codepoint to which a TCI state is mapped may be determined by its ordinal position among all the TCI state ID fields.

The MAC CE may also include DL/UL indicating whether the TCI state ID in the same octet is for joint/DL or UL TCI state. If this field is set to 1, the TCI state ID in the same octet may be for joint/DL. If this field is set to 0, the TCI state ID in the same octet may be for UL. The MAC CE may also include a TCI state ID indicating the TCI state identified by *TCI-StateId.* If D/U is set to 1, a 7-bit length TCI state ID (*i.e*., *TCI-StateId*) may be used. If D/U is set to 0, the most significant bit of TCI state ID may be used as the reserved bit, and remainder 6 bits may indicate the *UL-TCIState-Id.* The maximum number of activated TCI states may be 16. The MAC CE may also include reserved bit R set to 0.

If a target TCI state is known, the DL TCI switching to the indicated DL TCI state or joint TCI state in the DCI format may be completed starting from the first slot that is at least *BeamAppTime-r17* symbols after the last symbol of the physical uplink control channel (PUCCH) carrying hybrid automatic repeat request (HARQ)- acknowledgment (ACK) in response to the DCI triggering a TCI state activation. The first slot and the *BeamAppTime-r17* symbols may both be determined on the carrier with the smallest SCS among the carrier(s) applying the beam indication.

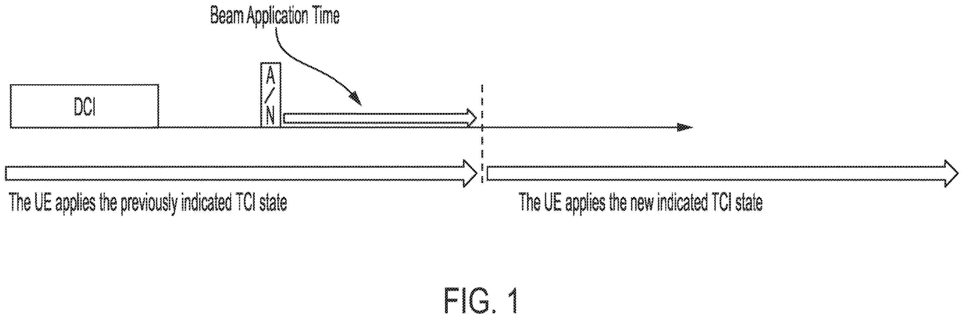

When a beam indication is provided by the network (e.g., in a DCI), after the UE sends an acknowledgement, the UE may apply the previously indicated TCI state until the beam application time (BAT) (*e.g., BeamApptime*) has passed, as depicted in FIG. 1. After the BAT, the UE is expected to use the new indicated TCI state, as depicted in FIG. 1.

Furthermore, *beamAppTime* may indicate the first slot to apply the unified TCI indicated by DCI. The value n1 may correspond with 1 symbol, n2 may correspond with two symbols, etc. The first slot may be at least Y symbols indicated by parameter *beamAppTime* after the last symbol of the acknowledgment of the joint or separate DL/UL beam indication. The same value may be configured for all serving cells in any one of the *simultaneousU-TCI-UpdateListN* configured in information element (IE) *CellGroupConfig* based on the smallest SCS of the active BWP.

A TA value association to an UL transmission (e.g., at least in unified TCI state concept) may be provided via a timing advance group (TAG) ID association with a TCI State (*e.g.,* joint /UL). For example, TCI states of one *CORESETPoolIndex* may belong to one TAG (*i.e.,* only a single TA value may be used within a *CORESETPoolIndex*)*.* In another example, for a *CORESETPoolIndex,* TCI states having different TAGs (*i.e*., different TA values) may be activated.

In order to associate TAGs to target UL channels/signals for multi-DCI based multi-TRP operation, TAGs may be associated with TCI states by associating TAG IDs with a UL/joint TCI state. For UL transmission, the TAG ID associated with the UL/joint TCI state may be used. The UE may expect that activated UL/joint TCI states of UL signals/channels associated with one *CORESETPoolIndex* may correspond with one TAG. A UE may report that it supports that the activated UL/joint TCI states of UL signals/channels may be associated with one *CORESETPoolIndex* correspond to both TAGs.

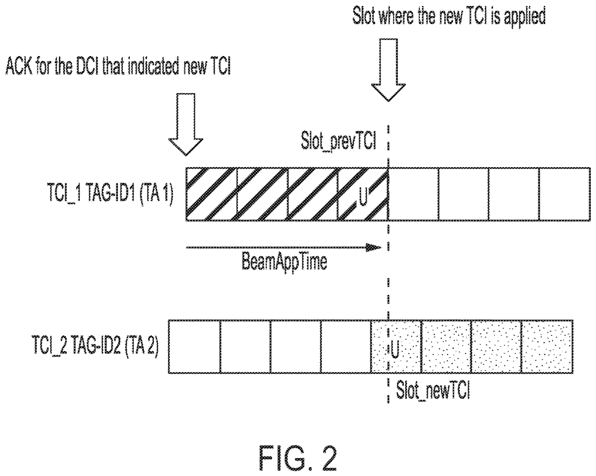

As illustrated in FIG. 2, when the UE applies the new TCI state with different TA value where the TA value of the TCI 1 is smaller than the TA value of the TCI 2 (*e.g.,* longer TA, the transmission would need to start earlier) in successive UL slots, the two UL transmissions may overlap. The activation of a TCI state may indicate that a DCI message may be used to indicate that one of the TCI states as indicated TCI state (*e.g., CORESETPoolIndex#0* has the first indicated TCI state), and the *PooIndex*#1 may have the second indicated TCI state.

Certain example embodiments described herein may have various benefits and/or advantages to overcome the disadvantages described above. For example, certain example embodiments may enable switching of TCI states for different TA values associated with different TCI states. Thus, certain example embodiments discussed below are directed to improvements in computer-related technology.

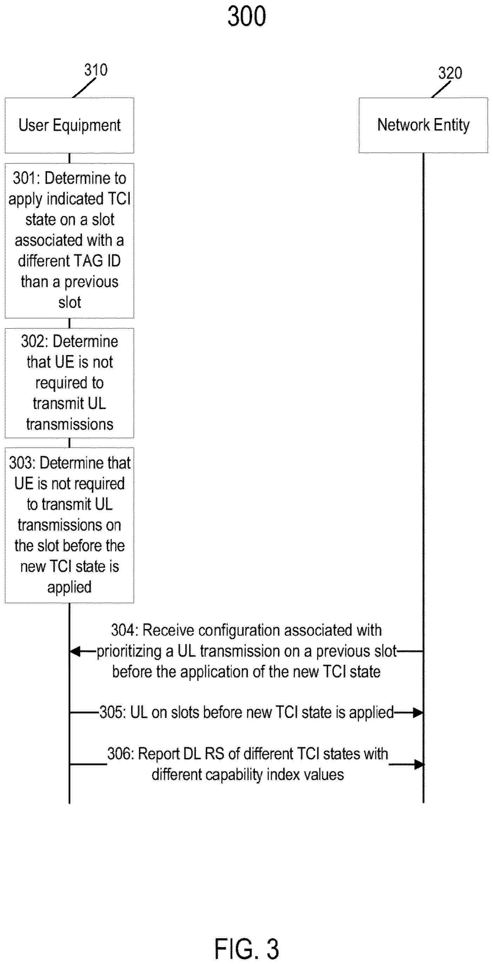

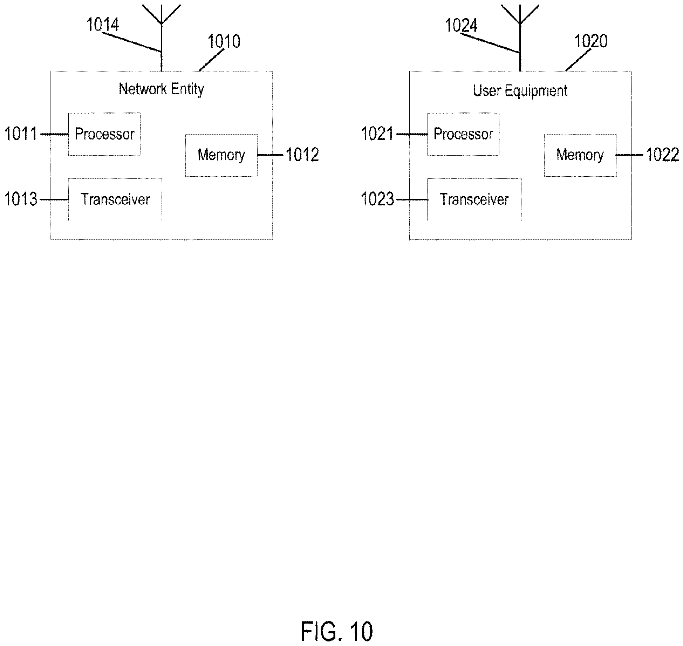

FIG. 3 illustrates an example of a signaling diagram 300 for facilitating triggered PDCCH-ordered PRACH transmissions in multi-TRP scenarios. UE 310 and NE 320 may be similar to UE 1020 and NE 1010, as illustrated in FIG. 10, according to certain example embodiments.

At 301, UE 310 may determine that UE 310 will apply an indicated TCI state on the slot (*e.g., Slot_newTCI*) that is associated with a different TAG ID (TA value) than the previous slot (*e.g., Slot_prevTCI*).

In some example embodiments, at 302, UE 310 may determine that UE 310 is not required to transmit UL transmissions on the at least first slot where a new TCI state is applied. For example, the determining may be based upon a TA value of the TAG ID associated with the new TCI being larger (*i.e*., more timing advance is required) than the TAG ID associated with the previous TCI state.

In various example embodiments, at 303, UE 310 may determine that UE 310 is not required to transmit UL transmissions on the slot before the slot where the new TCI state is applied (*i.e*., *Slot-prevTCI*). For example, the determining may be based on the TA value of the TAG ID associated with the new TCI being larger (*i.e*., more timing advance is required) than the TAD ID associated with the previous TCI state.

In certain example embodiments, at 304, UE 310 may receive from NE 320 a configuration associated with prioritizing a UL transmission on the previous slot before the application of the new TCI state (e.g., the previous slot before first slot after the BAT ends) and/or the first slot where the new TCI state (new beam) is applied. As an example, the UL transmission may include any of PUSCH, PUCCH, and SRS.

In various example embodiments, prioritizing UL transmissions may refer to selecting/determining that if one (first) UL transmission is to be performed, the another (second) one is not performed. Prioritizing of UL transmission may be performed when UE 310 is unable to perform UL transmissions on slots (that are adjacent, for example, first and second slot) cannot be performed *(i.e.,* UE 310 is able to perform one of the UL transmissions, for example, on the first or the second slot). Alternatively, prioritizing UL transmission may refer to selecting/determining that if one (second) UL transmission is to be performed, the first UL transmission is not performed. The prioritization (e.g., selection) of UL transmission may be defined in the specification or it may be configured by the network.

In certain example embodiments, UE 310 may prioritize an UL transmission on the previous slot before the application of the new TCI state (e.g., the previous slot before first slot after the BAT ends) and/or the first slot where the new TCI state (new beam) is applied. As an example, the UL transmission may include any of PUSCH, PUCCH, and SRS.

In some example embodiments, at 305, UE 310 may transmit to NE 320 UL on slots before the new TCI state is applied and/or on the first slot where the new TCI state is applied, if the TCI states are transmitted on different panels of UE 310.

In various example embodiments, at 306, UE 310 may report to NE 320 the DL RS of the different TCI states to NE 320 with different capability index values in a L1-beam report (e.g., L1-RSRP). For example, different reported capability index values may indicate that different panels are used to transmit different TCI states. If the different TCI states (first and second) include DL RS that have been reported (or are to be reported) with association of different reported capability index, UE 310 may be able to perform UL transmission on (adjacent) slots where different TCI states (previous and new) are applied. If the different TCI states (first and second) include DL RS that have been reported (or are to be reported) with an association of different UE (antenna) panel identifiers, UE 310 may be able to perform UL transmission on (adjacent) slots where different TCI states (previous and new) are applied.

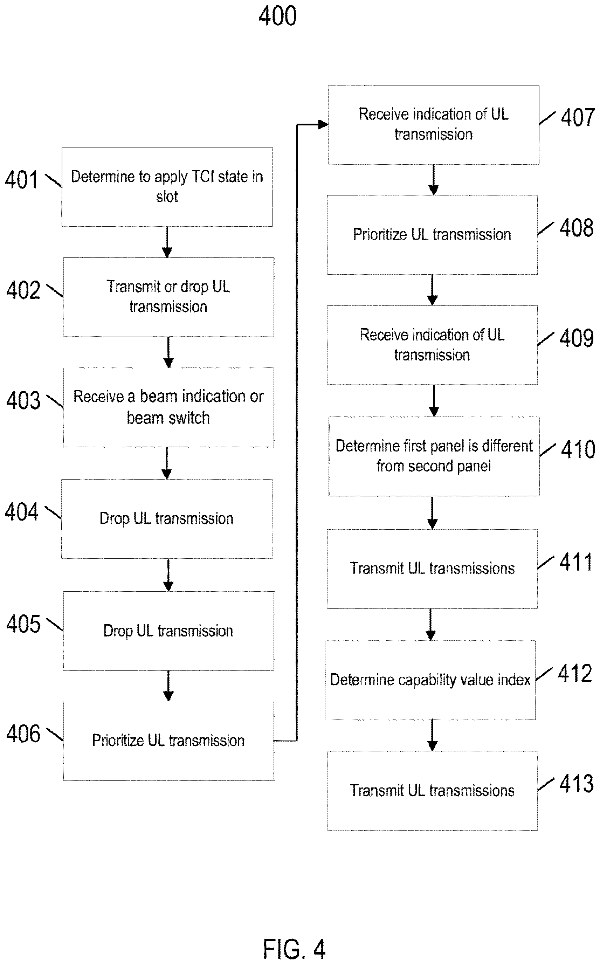

FIG. 4 illustrates an example of a flow diagram of a method 400 that may be performed by a UE, such as UE 1020 illustrated in FIG. 10, according to various example embodiments.

At step 401, the method may include determining that a first TCI state is to be applied in a first slot, and a second TCI state is to be applied in a second slot. The first TCI state may be associated with a first TAG ID, a second TCI state may be associated with a second TAG ID different than the first TAG ID, and the second slot may succeed and be adjacent to the first slot.

At step 402, the method may further include, based upon the determining, transmitting or dropping at least one of at least one UL transmission in the first slot or at least one UL transmission in a second slot. In any of the example embodiments described herein, the dropping of a transmission may refer to not transmitting on the slot where the transmission is dropped.

The first TAG ID may be associated with a first TA value, and the second TAG ID may be associated with a second TA value different than the first TA value. The second TA value may be larger than the first TA value.

At step 403, the method may further include receiving, from a network entity, such as NE 1010 illustrated in FIG. 10, while applying the first TCI state, a beam indication or beam switch indicating that the second TCI state for UL transmissions is to be applied for the UE.

At step 404, the method may further include dropping the at least one UL transmission in the first slot, and at step 405, the method may further include dropping the at least one UL transmission in the second slot.

At step 406, the method may further include prioritizing the at least one UL transmission in the first slot over the at least one UL transmission in the second slot, and at step 407, the method may further include receiving, from the network entity, an indication indicating that the at least one UL transmission in the first slot is to be prioritized over the least one UL transmission in the second slot.

At step 408, the method may further include prioritizing the at least one UL transmission in the second slot over the at least one uplink transmission in the first slot, and at step 409, the method may further include receiving, from the network entity, an indication indicating that the at least one UL transmission in the second slot is to be prioritized over the UL transmission in the first slot.

At step 410, the method may further include determining that a first panel of the UE associated with the first TCI state is different than a second panel of the UE associated with the second TCI state. At step 411, the method may further include, based on the determining, transmitting both the at least one UL transmission in the first slot and the at least one UL transmission in the second slot.

At step 412, the method may further include determining a capability value index associated with a DL RS corresponding to the first TCI state is different than a capability value index associated with a DL RS corresponding to the second TCI state. At step 413, the method may further include, based on the determining, transmitting both the at least one UL transmission in the first slot and the at least one UL transmissions in the second slot.

In some example embodiments, the at least one UL transmission in the first slot may include at least one of a PUSCH, a PUCCH, or a SRS and/or the at least one UL transmission in the second slot comprises at least one of a PUSCH, a PUCCH, or a SRS.

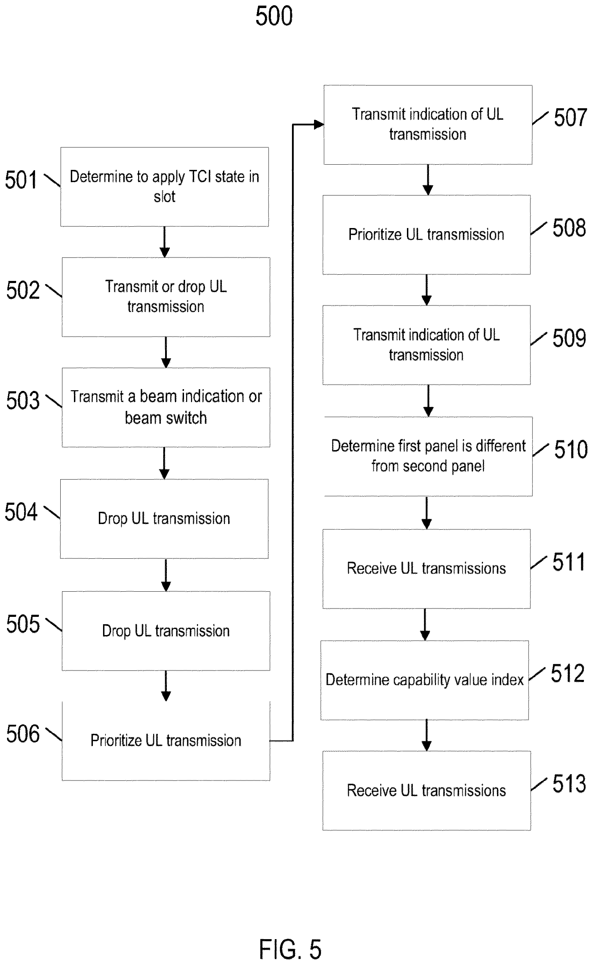

FIG. 5 illustrates an example of a flow diagram of a method 500 that may be performed by a NE, such as NE 1010 illustrated in FIG. 10, according to various example embodiments.

At step 501, the method may include determining that a first TCI state is to be applied in a first slot, and a second TCI state is to be applied in a second slot. The first TCI state may be associated with a first TAG ID, a second TCI state may be associated with a second TAG ID different than the first TAG ID, and the second slot may succeed and be adjacent to the first slot.

At step 502, the method may further include, based upon the determining, transmitting or dropping at least one of at least one UL transmission in the first slot or at least one UL transmission in a second slot.

The first TAG ID may be associated with a first TA value, and the second TAG ID may be associated with a second TA value different than the first TA value. The second TA value may be larger than the first TA value.

At step 503, the method may further include transmitting, to a user equipment, such as UE 1020 illustrated in FIG. 10, while applying the first TCI state, a beam indication or beam switch indicating that the second TCI state for UL transmissions is to be applied for the UE.

At step 504, the method may further include dropping the at least one UL transmission in the first slot, and at step 505, the method may further include dropping the at least one UL transmission in the second slot.

At step 506, the method may further include prioritizing the at least one UL transmission in the first slot over the at least one UL transmission in the second slot, and at step 507, the method may further include transmitting, to the user equipment, an indication indicating that the at least one UL transmission in the first slot is to be prioritized over the least one UL transmission in the second slot.

At step 508, the method may further include prioritizing the at least one UL transmission in the second slot over the at least one uplink transmission in the first slot, and at step 509, the method may further include transmitting, to a user equipment, an indication indicating that the at least one UL transmission in the second slot is to be prioritized over the UL transmission in the first slot.

At step 510, the method may further include determining that a first panel of the UE associated with the first TCI state is different than a second panel of the UE associated with the second TCI state. At step 511, the method may further include, based on the determining, receiving both the at least one UL transmission in the first slot and the at least one UL transmission in the second slot.

At step 512, the method may further include determining a capability value index associated with a DL RS corresponding to the first TCI state is different than a capability value index associated with a DL RS corresponding to the second TCI state. At step 513, the method may further include, based on the determining, receiving both the at least one UL transmission in the first slot and the at least one UL transmissions in the second slot.

In some example embodiments, the at least one UL transmission in the first slot may include at least one of a PUSCH, a PUCCH, or a SRS and/or the at least one UL transmission in the second slot comprises at least one of a PUSCH, a PUCCH, or a SRS.

In any of the example embodiments described herein, the dropping of a transmission may refer to not transmitting on the slot where the transmission is dropped, not transmitting at least one symbol on the slot where the transmission is dropped, transmitting on at least one symbol (but not on all the symbols on the slot where the transmission is scheduled) on the slot where the transmission is dropped, not transmitting on at least one symbol on the start of the slot where the transmission is dropped, and/or not transmitting on at least one symbol at the end of the slot where the transmission is dropped.

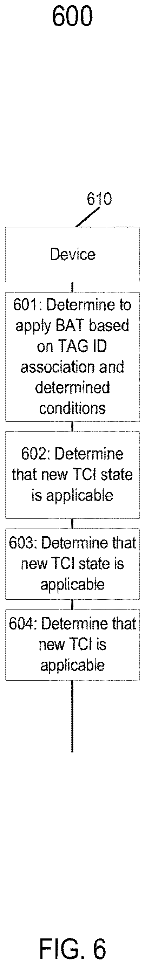

FIG. 6 illustrates an example of a signaling diagram 600 for facilitating triggered PDCCH-ordered PRACH transmissions in multi-TRP scenarios. Device 610 may be similar to NE 1010 or UE 1020, as illustrated in FIG. 10, according to certain example embodiments.

At 601, device 610 may determine that a BAT that would be applied by a UE, which may be device 610 or another device similar to UE 1020, may be determined based on the TAG ID association and determined conditions.

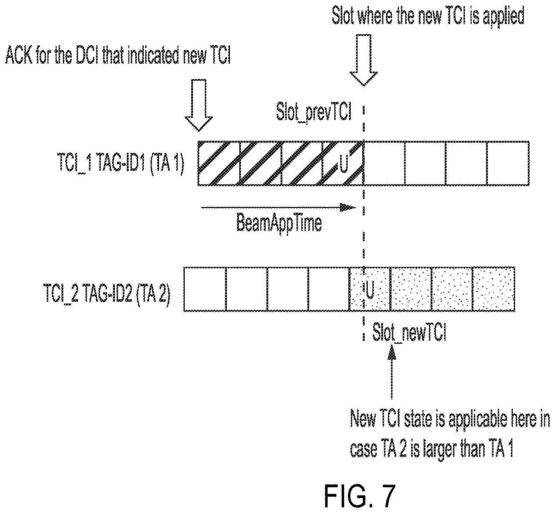

At 602, device 610 may determine that a new TCI state is applicable one slot later than it would be if the timing would remain the same if the following condition is met. For example, as illustrated in FIG. 7, the determination may be made if the TA value of the TAG ID associated with the new TCI is larger (*i.e*., more timing advance is required) than the TAD ID associated with the previous TCI state.

At 603, device 610 may determine that the new TCI state is applicable in the first slot after the slot where the BAT ends (*i.e*., new TCI state is applied) where the slot is a DL slot (*i.e*., not UL slot). For example, the determination at 603 may be made if the TA value of the TAG ID associated with the new TCI is larger (*i.e*., more timing advance is required) than the TAD ID associated with the previous TCI state.

In various example embodiments, the device may further determine (in any of the embodiments herein) whether the UL transmission is scheduled on both slots where the previous TCI state is applicable, and the new TCI State is applicable. If the device determines that on both slots the UL transmission is scheduled, it may apply the new TCI State according to the methods described herein.

At 604, device 610 may determine that the new TCI state is applicable in the first slot after the slot where the BAT ends (or the BAT would end *i.e*., new TCI state is or would be applied) where the UE is not scheduled with uplink transmission (*e.g.*, PUSCH, PUCCH and/or SRS) transmission (*i.e*., either DL/UL). For example, the determination may be made if the TA value of the TAG ID associated with the new TCI is larger (*i.e*., more timing advance is required) than the TAD ID associated with the previous TCI state.

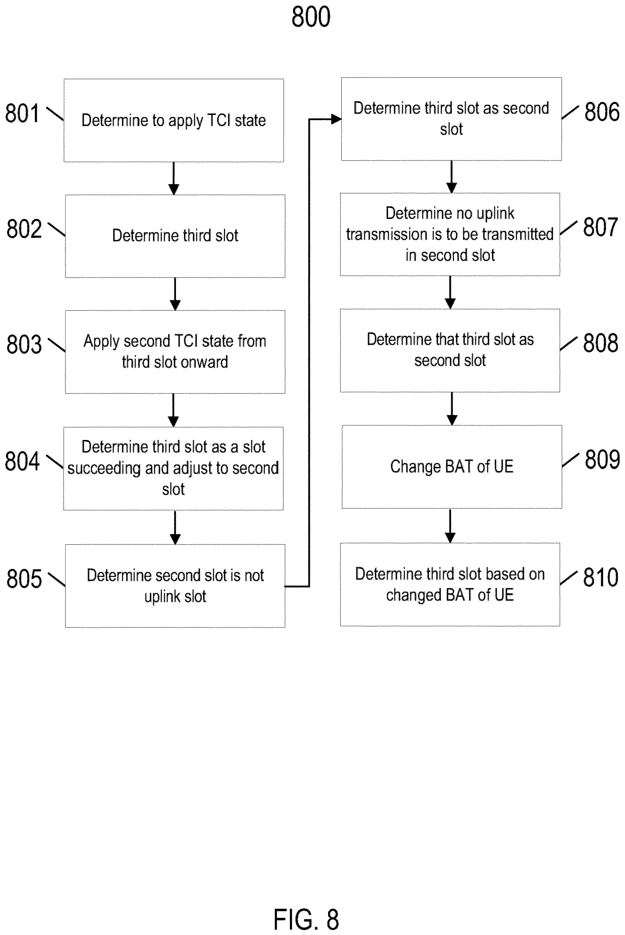

FIG. 8 illustrates an example of a flow diagram of a method 800 that may be performed by a UE, such as UE 1020 illustrated in FIG. 10, according to various example embodiments.

At step 801, the method may include determining that a first TCI state is to be applied in a first slot, and a second TCI state is to be applied in a second slot. The first TCI state may be associated with a first TAG ID, a second TCI state may be associated with a second TAG ID different than the first TAG ID, and the second slot may succeed and be adjacent to the first slot.

At step 802, the method may further include, based upon the determining, determining a third slot. The second TCI state may firstly be applied in the third slot.

At step 803, the method may further include applying the second TCI state from the third slot onward.

In certain example embodiments, the first TAG ID may be associated with a first TA value, and the second TAG ID may be associated with a second TA value different than the first TA value. The second TA value may be larger than the first TA value.

At step 804, the method may further include determining the third slot as a slot succeeding and adjacent to the second slot.

At step 805, the method may further include determining that the second slot is not an uplink slot, and at step 806, the method may further include, based on the determining, determining the third slot as the second slot.

At step 807, the method may further include determining no uplink transmission (*e.g*., PUSCH, PUCCH, SRS) is to be transmitted in the second slot, and at step 808, the method may further include, based on the determining, determining the third slot as the second slot.

At step 809, the method may further include changing a BAT of the UE, and at step 810, the method may further include determining the third slot based on the changed BAT of the UE. In various example embodiments, changing the BAT may include adding a number of symbols into the BAT.

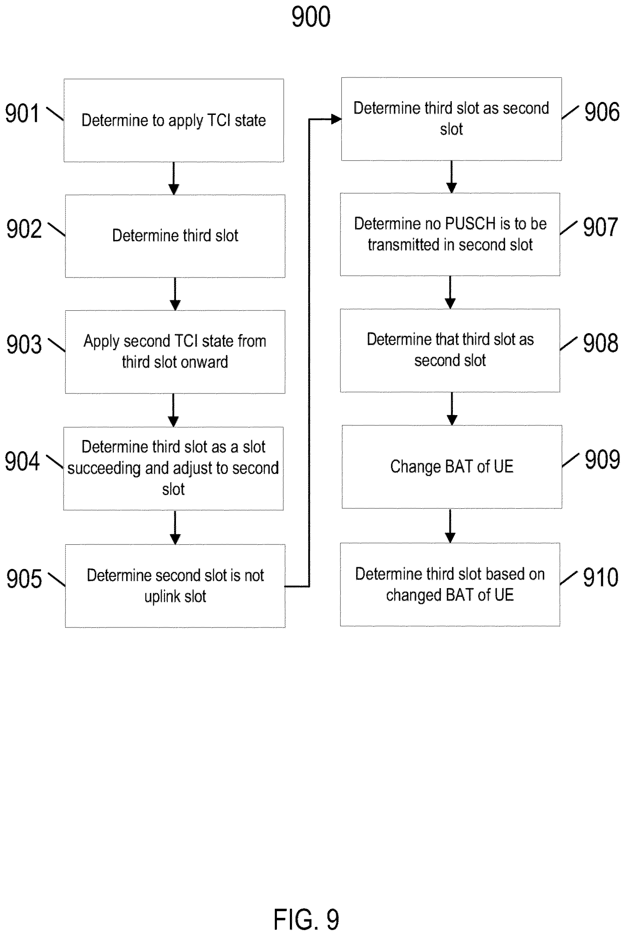

FIG. 9 illustrates an example of a flow diagram of a method 900 that may be performed by a NE, such as NE 1010 illustrated in FIG. 10, according to various example embodiments.

At step 901, the method may include determining that a first TCI state is to be applied in a first slot, and a second TCI state is to be applied in a second slot. The first TCI state may be associated with a first TAG ID, a second TCI state may be associated with a second TAG ID different than the first TAG ID, and the second slot may succeed and be adjacent to the first slot.

At step 902, the method may further include, based upon the determining, determining a third slot. The second TCI state may firstly be applied in the third slot.

At step 903, the method may further include applying the second TCI state from the third slot onward.

In certain example embodiments, the first TAG ID may be associated with a first TA value, and the second TAG ID may be associated with a second TA value different than the first TA value. The second TA value may be larger than the first TA value.

At step 904, the method may further include determining the third slot as a slot succeeding and adjacent to the second slot.

At step 905, the method may further include determining that the second slot is not an uplink slot, and at step 906, the method may further include, based on the determining, determining the third slot as the second slot.

At step 907, the method may further include determining no PUSCH is to be transmitted in the second slot, and at step 808, the method may further include, based on the determining, determining the third slot as the second slot.

At step 909, the method may further include changing a BAT of a UE, such as UE 1020 illustrated in FIG. 10, and at step 910, the method may further include determining the third slot based on the changed BAT of the UE. In various example embodiments, changing the BAT may include adding a number of symbols into the BAT.

FIG. 10 illustrates an example of a system according to certain example embodiments. In one example embodiment, a system may include multiple devices, such as, for example, NE 1010 and/or UE 1020.

NE 1010 may be one or more of a base station (*e.g.,* 3G UMTS NodeB, 4G LTE Evolved NodeB, or 5G NR Next Generation NodeB), a serving gateway, a server, and/or any other access node or combination thereof.

NE 1010 may further include at least one gNB-centralized unit (CU), which may be associated with at least one gNB-distributed unit (DU). The at least one gNB-CU and the at least one gNB-DU may be in communication via at least one F1 interface, at least one Xₙ-C interface, and/or at least one NG interface via a 5^{th} generation core (5GC).

UE 1020 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, NE 1010 and/or UE 1020 may be one or more of a citizens broadband radio service device (CBSD).

NE 1010 and/or UE 1020 may include at least one processor, respectively indicated as 1011 and 1021. Processors 1011 and 1021 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 1012 and 1022. The memory may be fixed or removable. The memory may include computer program instructions or computer code contained therein. Memories 1012 and 1022 may independently be any suitable storage device, such as a non-transitory computer-readable medium. The term "non-transitory," as used herein, may correspond to a limitation of the medium itself *(i.e.,* tangible, not a signal) as opposed to a limitation on data storage persistency (*e.g*., random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processors 1011 and 1021, memories 1012 and 1022, and any subset thereof, may be configured to provide means corresponding to the various blocks of FIGs. 3-9. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 10, transceivers 1013 and 1023 may be provided, and one or more devices may also include at least one antenna, respectively illustrated as 1014 and 1024. The device may have many antennas, such as an array of antennas configured for multiple input multiple output (MIMO) communications, or multiple antennas for multiple RATs. Other configurations of these devices, for example, may be provided. Transceivers 1013 and 1023 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above (*i.e.,* FIGs. 3-9). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus may include circuitry configured to perform any of the processes or functions illustrated in FIGs. 3-9. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (*e.g.*, firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

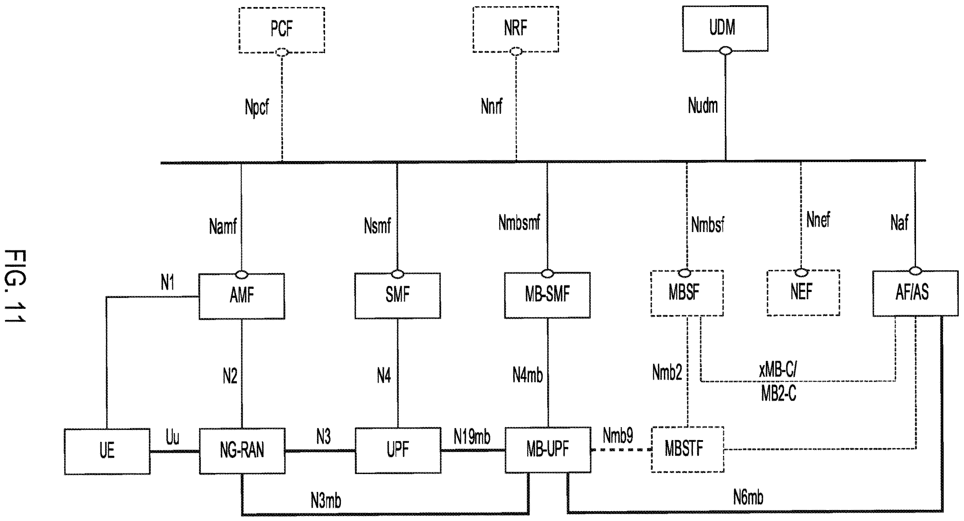

FIG. 11 illustrates an example of a 5G network and system architecture according to certain example embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 11 may be similar to NE 1010 and UE 1020, respectively. The user plane function (UPF) may provide services such as intra-RAT and inter-RAT mobility, routing and forwarding of data packets, inspection of packets, user plane quality of service (QoS) processing, buffering of DL packets, and/or triggering of DL data notifications. The application function (AF) may primarily interface with the core network to facilitate application usage of traffic routing and interact with the policy framework.

According to certain example embodiments, processors 1011 and 1021, and memories 1012 and 1022, may be included in or may form a part of processing circuitry or control circuitry. In addition, in some example embodiments, transceivers 1013 and 1023 may be included in or may form a part of transceiving circuitry.

In some example embodiments, an apparatus (*e.g.*, NE 1010 and/or UE 1020) may include means for performing a method, a process, or any of the variants discussed herein. Examples of the means may include one or more processors, memory, controllers, transmitters, receivers, and/or computer program code for causing the performance of the operations.

In various example embodiments, apparatus 1020 may be controlled by memory 1022 and processor 1021 to determine that a first TCI state is to be applied in a first slot, and a second TCI state is to be applied in a second slot; and, based upon the determining, transmit or drop at least one of at least one UL transmission in the first slot or at least one UL transmission in a second slot. The first TCI state is associated with a first TAG ID, a second TCI state is associated with a second TAG ID different than the first TAG ID, and the second slot is succeeding and adjacent to the first slot.

Certain example embodiments may be directed to an apparatus that includes means for performing any of the methods described herein including, for example, means for determining that a first TCI state is to be applied in a first slot, and a second TCI state is to be applied in a second slot; and, means for, based upon the determining, transmitting or dropping at least one of at least one UL transmission in the first slot or at least one UL transmission in a second slot. The first TCI state is associated with a first TAG ID, a second TCI state is associated with a second TAG ID different than the first TAG ID, and the second slot is succeeding and adjacent to the first slot.

In various example embodiments, apparatus 1010 may be controlled by memory 1012 and processor 1011 to determine that a first TCI state is to be applied in a first slot, and a second TCI state is to be applied in a second slot; and, based upon the determining, block scheduling and expecting of at least one UL transmission at least one of at least one UL transmission in the first slot or at least one UL transmission in a second slot. The first TCI state is associated with a first TAG ID, a second TCI state is associated with a second TAG ID different than the first TAG ID, and the second slot is succeeding and adjacent to the first slot.

Certain example embodiments may be directed to an apparatus that includes means for performing any of the methods described herein including, for example, means for determining that a first TCI state is to be applied in a first slot, and a second TCI state is to be applied in a second slot; and, based upon the determining, blocking scheduling of and expecting of at least one UL transmission at least one of at least one UL transmission in the first slot or at least one UL transmission in a second slot. The first TCI state is associated with a first TAG ID, a second TCI state is associated with a second TAG ID different than the first TAG ID, and the second slot is succeeding and adjacent to the first slot.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

### Partial Glossary

- 3GPP: 3^{rd} Generation Partnership Project
- 5G: 5^{th} Generation
- SGC: 5^{th} Generation Core
- 6G: 6^{th} Generation
- ACK: Acknowledgement
- AF: Application Function
- ASIC: Application Specific Integrated Circuit
- BAT: Beam Application Time
- BWP: Bandwidth Part
- CBSD: Citizens Broadband Radio Service Device
- CE: Control Elements
- CORESET: Control Resource Set
- CPU: Central Processing Unit
- CU: Centralized Unit
- DCI: Downlink Control Information
- DL: Downlink
- DU: Distributed Unit
- eLCID: Extended Logical Channel Identifier
- eMBB: Enhanced Mobile Broadband
- eNB: Evolved Node B
- gNB: Next Generation Node B
- GPS: Global Positioning System
- HARQ: Hybrid Automatic Repeat Request
- HDD: Hard Disk Drive
- ID: Identifier
- IE: Information Element
- IoT: Internet of Things
- LTE: Long-Term Evolution
- LTE-A: Long-Term Evolution Advanced
- MAC: Medium Access Control
- MEMS: Micro Electrical Mechanical System
- MIMO: Multiple Input Multiple Output
- mMTC: Massive Machine Type Communication
- NE: Network Entity
- NG: Next Generation
- NG-eNB: Next Generation Evolved Node B
- NG-RAN: Next Generation Radio Access Network
- NR: New Radio
- PDA: Personal Digital Assistance
- PDCCH: Physical Downlink Control Channel
- PRACH: Physical Random Access Channel
- PUCCH: Physical Uplink Control Channel
- PUSCH: Physical Uplink Shared Channel
- QoS: Quality of Service
- RAM: Random Access Memory
- RAN: Radio Access Network
- RAT: Radio Access Technology
- RF: Radio Frequency
- ROM: Read-Only Memory
- RSRP: Reference Signal Received Power
- SRS: Sounding Reference Signal
- TA: Timing Advance
- TAG: Timing Advance Group
- TCI: Transmission Configuration Indicator
- TRP: Transmission Reception Point
- UE: User Equipment
- UL: Uplink
- UMTS: Universal Mobile Telecommunications System
- UPF: User Plane Function
- URLLC: Ultra-Reliable and Low-Latency Communication
- UTRAN: Universal Mobile Telecommunications System Terrestrial Radio Access Network

Further aspects and example embodiments of the invention are set out in the following numbered paragraphs.
1. An apparatus comprising:
   at least one processor; and
   at least one memory storing instructions that, when executed by the at least one processor, cause the apparatus at least to:
      determine that a first transmission configuration indicator state is to be applied in a first slot and a second transmission configuration indicator state is to be applied in a second slot, wherein the first transmission configuration indicator state is associated with a first timing advance group identifier, a second transmission configuration indicator state is associated with a second timing advance group identifier different than the first timing advance group identifier, and the second slot is succeeding and adjacent to the first slot; and
      based upon the determining, transmit or drop at least one of at least one uplink transmission in the first slot or at least one uplink transmission in a second slot.
2. The apparatus of paragraph 1, wherein the first timing advance group identifier is associated with a first timing advance value, and the second timing advance group identifier is associated with a second timing advance value different than the first timing advance value.
3. The apparatus of paragraph 1 or 2, wherein the second timing advance value is larger than the first timing advance value.
4. The apparatus of any of paragraphs 1-3, wherein the at least one memory and the instructions, when executed by the at least one processor, further cause the apparatus at least to:
   receive while applying the first transmission configuration indicator state, a beam indication or beam switch indicating that the second transmission configuration indicator state for uplink transmissions is to be applied for the user equipment.
5. The apparatus of any of paragraphs 1-4, wherein the at least one memory and the instructions, when executed by the at least one processor, further cause the apparatus at least to:
   drop the at least one uplink transmission in the first slot.
6. The apparatus of any of paragraphs 1-5, wherein the at least one memory and the instructions, when executed by the at least one processor, further cause the apparatus at least to:
   drop the at least one uplink transmission in the second slot.
7. The apparatus of any of paragraphs 1-6, wherein the at least one memory and the instructions, when executed by the at least one processor, further cause the apparatus at least to:
   prioritize the at least one uplink transmission in the first slot over the at least one uplink transmission in the second slot.
8. The apparatus of any of paragraphs 1-7, wherein the at least one memory and the instructions, when executed by the at least one processor, further cause the apparatus at least to:
   receive an indication indicating that the at least one uplink transmission in the first slot is to be prioritized over the least one uplink transmission in the second slot.
9. The apparatus of any of paragraphs 1-8, wherein the at least one memory and the instructions, when executed by the at least one processor, further cause the apparatus at least to:
   prioritize the at least one uplink transmission in the second slot over the at least one uplink transmission in the first slot.
10. The apparatus of paragraph 9, wherein the at least one memory and the instructions, when executed by the at least one processor, further cause the apparatus at least to:
   receive an indication indicating that the at least one uplink transmission in the second slot is to be prioritized over the uplink transmission in the first slot.
11. The apparatus of any of paragraphs 1-10, wherein the at least one memory and the instructions, when executed by the at least one processor, further cause the apparatus at least to:
   determine that a first panel of the user equipment associated with the first transmission configuration indicator state is different than a second panel of the user equipment associated with the second transmission configuration indicator state; and
   based on the determining, transmit both the at least one uplink transmission in the first slot and the at least one uplink transmission in the second slot.
12. The apparatus of any of paragraphs 1-11, wherein the at least one memory and the instructions, when executed by the at least one processor, further cause the apparatus at least to:
   determine a capability value index associated with a downlink reference signal corresponding to the first transmission configuration indicator state is different than a capability value index associated with a downlink reference signal corresponding to the second transmission configuration indicator state; and
   based on the determining, transmit both the at least one uplink transmission in the first slot and the at least one uplink transmissions in the second slot.
13. The apparatus of any of paragraphs 1-12, wherein the at least one uplink transmission in the first slot comprises at least one of a physical uplink shared channel, a physical uplink control channel, or a sounding reference signal and/or the at least one uplink transmission in the second slot comprises at least one of a physical uplink shared channel, a physical uplink control channel, or a sounding reference signal.
14. An apparatus comprising:
   at least one processor; and
   at least one memory storing instructions that, when executed by the at least one processor, cause the apparatus at least to:
      determine that a first transmission configuration indicator state is to be applied in a first slot and a second transmission configuration indicator state is to be applied in a second slot, wherein the first transmission configuration indicator state is associated with a first timing advance group identifier, a second transmission configuration indicator state is associated with a second timing advance group identifier different than the first timing advance group identifier, and the second slot is succeeding and adjacent to the first slot; and
      based upon the determining, block scheduling and expecting of at least one uplink transmission at least one of at least one uplink transmission in the first slot or at least one uplink transmission in a second slot.
15. The apparatus of paragraph 14, wherein the first timing advance group identifier is associated with a first timing advance value, and the second timing advance group identifier is associated with a second timing advance value different than the first timing advance value.
16. The apparatus of paragraph 14 or 15, wherein the second timing advance value is larger than the first timing advance value.
17. The apparatus of any of paragraphs 14-16, wherein the at least one memory and the instructions, when executed by the at least one processor, further cause the apparatus at least to:
   receive, from a network entity, while applying the first transmission configuration indicator state, a beam indication or beam switch indicating that the second transmission configuration indicator state for uplink transmissions is to be applied for the apparatus.
18. The apparatus of any of paragraphs 14-17, wherein the at least one memory and the instructions, when executed by the at least one processor, further cause the apparatus at least to:
   block scheduling and expecting of the at least one uplink transmission in the first slot.
19. The apparatus of any of paragraphs 14-18, wherein the at least one memory and the instructions, when executed by the at least one processor, further cause the apparatus at least to:
   block scheduling and expecting of the at least one uplink transmission in the second slot.
20. The apparatus of any of paragraphs 14-19, wherein the at least one memory and the instructions, when executed by the at least one processor, further cause the apparatus at least to:
   prioritize the reception of at least one uplink transmission in the first slot over the at least one uplink transmission in the second slot.
21. The apparatus of paragraph 20, wherein the at least one memory and the instructions, when executed by the at least one processor, further cause the apparatus at least to:
   receive, from a network entity, an indication indicating that the at least one uplink transmission in the first slot is to be prioritized over the least one uplink transmission in the second slot.
22. The apparatus of any of paragraphs 14-21, wherein the at least one memory and the instructions, when executed by the at least one processor, further cause the apparatus at least to:
   prioritize the reception of at least one uplink transmission in the second slot over the at least one uplink transmission in the first slot.
23. The apparatus of paragraph 22, wherein the at least one memory and the instructions, when executed by the at least one processor, further cause the apparatus at least to:
   receive, from a network entity, an indication indicating that the at least one uplink transmission in the second slot is to be prioritized over the uplink transmission in the first slot.
24. The apparatus of any of paragraphs 14-23, wherein the at least one memory and the instructions, when executed by the at least one processor, further cause the apparatus at least to:
   determine that a first panel of the apparatus associated with the first transmission configuration indicator state is different than a second panel of the apparatus associated with the second transmission configuration indicator state; and
   based on the determining, receive the transmission of both the at least one uplink transmission in the first slot and the at least one uplink transmission in the second slot.
25. The apparatus of any of paragraphs 14-24, wherein the at least one memory and the instructions, when executed by the at least one processor, further cause the apparatus at least to:
   determine a capability value index associated with a downlink reference signal corresponding to the first transmission configuration indicator state is different than a capability value index associated with a downlink reference signal corresponding to the second transmission configuration indicator state; and
   based on the determining, receive the transmission of both the at least one uplink transmission in the first slot and the at least one uplink transmissions in the second slot.
26. The apparatus of any of paragraphs 14-25, wherein the at least one uplink transmission in the first slot comprises at least one of a physical uplink shared channel, a physical uplink control channel, or a sounding reference signal and/or the at least one uplink transmission in the second slot comprises at least one of a physical uplink shared channel, a physical uplink control channel, or a sounding reference signal.
27. A method comprising:
   determining, by a user equipment, that a first transmission configuration indicator state is to be applied in a first slot and a second transmission configuration indicator state is to be applied in a second slot, wherein the first transmission configuration indicator state is associated with a first timing advance group identifier, a second transmission configuration indicator state is associated with a second timing advance group identifier different than the first timing advance group identifier, and the second slot is succeeding and adjacent to the first slot; and
   based upon the determining, transmitting or dropping at least one of at least one uplink transmission in the first slot or at least one uplink transmission in a second slot.
28. The method of paragraph 27, wherein the first timing advance group identifier is associated with a first timing advance value, and the second timing advance group identifier is associated with a second timing advance value different than the first timing advance value.
29. The method of paragraph 27 or 28, wherein the second timing advance value is larger than the first timing advance value.
30. The method of any of paragraphs 27-29, further comprising:
   receiving, from a network entity, while applying the first transmission configuration indicator state, a beam indication or beam switch indicating that the second transmission configuration indicator state for uplink transmissions is to be applied for the user equipment.
31. The method of any of paragraphs 27-30, further comprising:
   dropping the at least one uplink transmission in the first slot.
32. The method of any of paragraphs 27-31, further comprising:
   dropping the at least one uplink transmission in the second slot.
33. The method of any of paragraphs 27-32, further comprising:
   prioritizing the at least one uplink transmission in the first slot over the at least one uplink transmission in the second slot.
34. The method of paragraph 33, further comprising:
   receiving, from a network entity, an indication indicating that the at least one uplink transmission in the first slot is to be prioritized over the least one uplink transmission in the second slot.
35. The method of any of paragraphs 27-34, further comprising:
   prioritizing the at least one uplink transmission in the second slot over the at least one uplink transmission in the first slot.
36. The method of paragraph 35, further comprising:
   receiving, from a network entity, an indication indicating that the at least one uplink transmission in the second slot is to be prioritized over the uplink transmission in the first slot.
37. The method of any of paragraphs 27-36, further comprising:
   determining that a first panel of the user equipment associated with the first transmission configuration indicator state is different than a second panel of the user equipment associated with the second transmission configuration indicator state; and
   based on the determining, transmitting both the at least one uplink transmission in the first slot and the at least one uplink transmission in the second slot.
38. The method of any of paragraphs 27-37, further comprising:
   determining a capability value index associated with a downlink reference signal corresponding to the first transmission configuration indicator state is different than a capability value index associated with a downlink reference signal corresponding to the second transmission configuration indicator state; and
   based on the determining, transmitting both the at least one uplink transmission in the first slot and the at least one uplink transmissions in the second slot.
39. The method of any of paragraphs 27-38, wherein the at least one uplink transmission in the first slot comprises at least one of a physical uplink shared channel, a physical uplink control channel, or a sounding reference signal and/or the at least one uplink transmission in the second slot comprises at least one of a physical uplink shared channel, a physical uplink control channel, or a sounding reference signal.
40. A method comprising:
   determining, by a network entity, that a first transmission configuration indicator state is to be applied in a first slot and a second transmission configuration indicator state is to be applied in a second slot, wherein the first transmission configuration indicator state is associated with a first timing advance group identifier, a second transmission configuration indicator state is associated with a second timing advance group identifier different than the first timing advance group identifier, and the second slot is succeeding and adjacent to the first slot; and
   based upon the determining, blocking scheduling of and expecting of at least one uplink transmission at least one of at least one uplink transmission in the first slot or at least one uplink transmission in a second slot.
41. The method of paragraph 40, wherein the first timing advance group identifier is associated with a first timing advance value, and the second timing advance group identifier is associated with a second timing advance value different than the first timing advance value.
42. The method of paragraph 40 or 41, wherein the second timing advance value is larger than the first timing advance value.
43. The method of any of paragraphs 40-42, further comprising:
   transmitting, to a user equipment, while applying the first transmission configuration indicator state, a beam indication or beam switch indicating that the second transmission configuration indicator state for uplink transmissions is to be applied for the user equipment.
44. The method of any of paragraphs 40-43, further comprising:
   blocking scheduling of and expecting of the at least one uplink transmission in the first slot.
45. The method of any of paragraphs 40-44, further comprising:
   blocking scheduling of and expecting of the at least one uplink transmission in the second slot.
46. The method of any of paragraphs 40-45, further comprising:
   prioritizing the reception of at least one uplink transmission in the first slot over the at least one uplink transmission in the second slot.
47. The method of paragraph 46, further comprising:
   transmitting, to the user equipment, an indication indicating that the at least one uplink transmission in the first slot is to be prioritized over the least one uplink transmission in the second slot.
48. The method of any of paragraphs 40-47, further comprising:
   prioritizing the reception of at least one uplink transmission in the second slot over the at least one uplink transmission in the first slot.
49. The method of paragraph 48, further comprising:
   transmitting, to the user equipment, an indication indicating that the at least one uplink transmission in the second slot is to be prioritized over the uplink transmission in the first slot.
50. The method of any of paragraphs 40-49, further comprising:
   determining that a first panel of the user equipment associated with the first transmission configuration indicator state is different than a second panel of the user equipment associated with the second transmission configuration indicator state; and
   based on the determining, receiving the transmission of both the at least one uplink transmission in the first slot and the at least one uplink transmission in the second slot.
51. The method of any of paragraphs 40-50, further comprising:
   determining a capability value index associated with a downlink reference signal corresponding to the first transmission configuration indicator state is different than a capability value index associated with a downlink reference signal corresponding to the second transmission configuration indicator state; and
   based on the determining, receiving the transmission of both the at least one uplink transmission in the first slot and the at least one uplink transmissions in the second slot.
52. The method of any of paragraphs 40-51, wherein the at least one uplink transmission in the first slot comprises at least one of a physical uplink shared channel, a physical uplink control channel, or a sounding reference signal and/or the at least one uplink transmission in the second slot comprises at least one of a physical uplink shared channel, a physical uplink control channel, or a sounding reference signal.
53. An apparatus comprising:
   means for determining that a first transmission configuration indicator state is to be applied in a first slot and a second transmission configuration indicator state is to be applied in a second slot, wherein the first transmission configuration indicator state is associated with a first timing advance group identifier, a second transmission configuration indicator state is associated with a second timing advance group identifier different than the first timing advance group identifier, and the second slot is succeeding and adjacent to the first slot; and
   means for, based upon the determining, transmitting or dropping at least one of at least one uplink transmission in the first slot or at least one uplink transmission in a second slot.
54. The apparatus of paragraph 53, wherein the first timing advance group identifier is associated with a first timing advance value, and the second timing advance group identifier is associated with a second timing advance value different than the first timing advance value.
55. The apparatus of paragraph 53 or 54, wherein the second timing advance value is larger than the first timing advance value.
56. The apparatus of any of paragraphs 53-55, further comprising:
   means for receiving, from a network entity, while applying the first transmission configuration indicator state, a beam indication or beam switch indicating that the second transmission configuration indicator state for uplink transmissions is to be applied for the user equipment.
57. The apparatus of any of paragraphs 53-56, further comprising:
   means for dropping the at least one uplink transmission in the first slot.
58. The apparatus of any of paragraphs 53-57, further comprising:
   means for dropping the at least one uplink transmission in the second slot.
59. The apparatus of any of paragraphs 53-58, further comprising:
   means for prioritizing the at least one uplink transmission in the first slot over the at least one uplink transmission in the second slot.
60. The apparatus of paragraph 59, further comprising:
   means for receiving, from a network entity, an indication indicating that the at least one uplink transmission in the first slot is to be prioritized over the least one uplink transmission in the second slot.
61. The apparatus of any of paragraphs 53-60, further comprising:
   means for prioritizing the at least one uplink transmission in the second slot over the at least one uplink transmission in the first slot.
62. The apparatus of paragraph 61, further comprising:
   means for receiving, from a network entity, an indication indicating that the at least one uplink transmission in the second slot is to be prioritized over the uplink transmission in the first slot.
63. The apparatus of any of paragraphs 53-62, further comprising:
   means for determining that a first panel of the user equipment associated with the first transmission configuration indicator state is different than a second panel of the user equipment associated with the second transmission configuration indicator state; and
   means for, based on the determining, transmitting both the at least one uplink transmission in the first slot and the at least one uplink transmission in the second slot.
64. The apparatus of any of paragraphs 53-63, further comprising:
   means for determining a capability value index associated with a downlink reference signal corresponding to the first transmission configuration indicator state is different than a capability value index associated with a downlink reference signal corresponding to the second transmission configuration indicator state; and
   means for, based on the determining, transmitting both the at least one uplink transmission in the first slot and the at least one uplink transmissions in the second slot.
65. The apparatus of any of paragraphs 53-64, wherein the at least one uplink transmission in the first slot comprises at least one of a physical uplink shared channel, a physical uplink control channel, or a sounding reference signal and/or the at least one uplink transmission in the second slot comprises at least one of a physical uplink shared channel, a physical uplink control channel, or a sounding reference signal.
66. An apparatus comprising:
   means for determining that a first transmission configuration indicator state is to be applied in a first slot and a second transmission configuration indicator state is to be applied in a second slot, wherein the first transmission configuration indicator state is associated with a first timing advance group identifier, a second transmission configuration indicator state is associated with a second timing advance group identifier different than the first timing advance group identifier, and the second slot is succeeding and adjacent to the first slot; and
   means for, based upon the determining, blocking scheduling of and expecting of at least one uplink transmission at least one of at least one uplink transmission in the first slot or at least one uplink transmission in a second slot.
67. The apparatus of paragraph 66, wherein the first timing advance group identifier is associated with a first timing advance value, and the second timing advance group identifier is associated with a second timing advance value different than the first timing advance value.
68. The apparatus of paragraph 66 and 67, wherein the second timing advance value is larger than the first timing advance value.
69. The apparatus of any of paragraphs 66-68, further comprising:
   means for transmitting, to a user equipment, while applying the first transmission configuration indicator state, a beam indication or beam switch indicating that the second transmission configuration indicator state for uplink transmissions is to be applied for the user equipment.
70. The apparatus of any of paragraphs 66-69, further comprising:
   means for blocking scheduling of and expecting of the at least one uplink transmission in the first slot.
71. The apparatus of any of paragraphs 66-70, further comprising:
   means for blocking scheduling of and expecting of the at least one uplink transmission in the second slot.
72. The apparatus of any of paragraphs 66-71, further comprising:
   means for prioritizing the reception of at least one uplink transmission in the first slot over the at least one uplink transmission in the second slot.
73. The apparatus of paragraph 72, further comprising:
   means for transmitting, to the user equipment, an indication indicating that the at least one uplink transmission in the first slot is to be prioritized over the least one uplink transmission in the second slot.
74. The apparatus of any of paragraphs 66-73, further comprising:
   means for prioritizing the reception of at least one uplink transmission in the second slot over the at least one uplink transmission in the first slot.
75. The apparatus of paragraph 74, further comprising:
   means for transmitting, to the user equipment, an indication indicating that the at least one uplink transmission in the second slot is to be prioritized over the uplink transmission in the first slot.
76. The apparatus of any of paragraphs 66-75, further comprising:
   means for determining that a first panel of the user equipment associated with the first transmission configuration indicator state is different than a second panel of the user equipment associated with the second transmission configuration indicator state; and
   means for, based on the determining, receiving the transmission of both the at least one uplink transmission in the first slot and the at least one uplink transmission in the second slot.
77. The apparatus of any of paragraphs 66-76, further comprising:
   means for determining a capability value index associated with a downlink reference signal corresponding to the first transmission configuration indicator state is different than a capability value index associated with a downlink reference signal corresponding to the second transmission configuration indicator state; and
   means for, based on the determining, receiving the transmission of both the at least one uplink transmission in the first slot and the at least one uplink transmissions in the second slot.
78. The apparatus of any of paragraphs 66-77, wherein the at least one uplink transmission in the first slot comprises at least one of a physical uplink shared channel, a physical uplink control channel, or a sounding reference signal and/or the at least one uplink transmission in the second slot comprises at least one of a physical uplink shared channel, a physical uplink control channel, or a sounding reference signal.
79. A non-transitory computer readable medium comprising program instructions that, when executed by an apparatus, cause the apparatus to perform at least a method according to any of paragraphs 27-52.
80. An apparatus comprising circuitry configured to perform a method according to any of paragraphs 27-52.
81. A computer program comprising instructions, which, when executed by an apparatus, cause the apparatus to perform the method of any of paragraphs 27-52.

Some example embodiments provide systems, methods, apparatuses, and computer program products for facilitating triggered PDCCH-ordered PRACH transmissions in multi-TRP scenarios. One method may include a UE determining that a first TCI state is to be applied in a first slot and a second TCI state is to be applied in a second slot. The first TCI state is associated with a first TAG ID, a second TCI state is associated with a second TAG ID different than the first TAG ID, and the second slot is succeeding and adjacent to the first slot. The method may further include, based upon the determining, transmitting or dropping at least one of at least one uplink transmission in the first slot or at least one uplink transmission in a second slot.

## Claims

1. An apparatus comprising:
at least one processor; and
at least one memory storing instructions that, when executed by the at least one processor, cause the apparatus at least to:
determine that a first transmission configuration indicator state is to be applied in a first slot and a second transmission configuration indicator state is to be applied in a second slot, wherein the first transmission configuration indicator state is associated with a first timing advance group identifier, a second transmission configuration indicator state is associated with a second timing advance group identifier different than the first timing advance group identifier, and the second slot is succeeding and adjacent to the first slot; and
based upon the determining, transmit or drop at least one of at least one uplink transmission in the first slot or at least one uplink transmission in a second slot.

2. The apparatus of claim 1, wherein the first timing advance group identifier is associated with a first timing advance value, and the second timing advance group identifier is associated with a second timing advance value different than the first timing advance value.

3. The apparatus of claim 1 or 2, wherein the second timing advance value is larger than the first timing advance value.

4. The apparatus of any of claims 1-3, wherein the at least one memory and the instructions, when executed by the at least one processor, further cause the apparatus at least to at least one of:
receive while applying the first transmission configuration indicator state, a beam indication or beam switch indicating that the second transmission configuration indicator state for uplink transmissions is to be applied for the user equipment;
drop the at least one uplink transmission in the first slot;
drop the at least one uplink transmission in the second slot;
prioritize the at least one uplink transmission in the first slot over the at least one uplink transmission in the second slot;
receive an indication indicating that the at least one uplink transmission in the first slot is to be prioritized over the least one uplink transmission in the second slot;
prioritize the at least one uplink transmission in the second slot over the at least one uplink transmission in the first slot; and
receive an indication indicating that the at least one uplink transmission in the second slot is to be prioritized over the uplink transmission in the first slot.

5. The apparatus of any of claims 1-4, wherein the at least one memory and the instructions, when executed by the at least one processor, further cause the apparatus at least to:
determine that a first panel of the user equipment associated with the first transmission configuration indicator state is different than a second panel of the user equipment associated with the second transmission configuration indicator state; and
based on the determining, transmit both the at least one uplink transmission in the first slot and the at least one uplink transmission in the second slot.

6. The apparatus of any of claims 1-5, wherein the at least one memory and the instructions, when executed by the at least one processor, further cause the apparatus at least to:
determine a capability value index associated with a downlink reference signal corresponding to the first transmission configuration indicator state is different than a capability value index associated with a downlink reference signal corresponding to the second transmission configuration indicator state; and
based on the determining, transmit both the at least one uplink transmission in the first slot and the at least one uplink transmissions in the second slot.

7. The apparatus of any of claims 1-6, wherein the at least one uplink transmission in the first slot comprises at least one of a physical uplink shared channel, a physical uplink control channel, or a sounding reference signal and/or the at least one uplink transmission in the second slot comprises at least one of a physical uplink shared channel, a physical uplink control channel, or a sounding reference signal.

8. An apparatus comprising:
at least one processor; and
at least one memory storing instructions that, when executed by the at least one processor, cause the apparatus at least to:
determine that a first transmission configuration indicator state is to be applied in a first slot and a second transmission configuration indicator state is to be applied in a second slot, wherein the first transmission configuration indicator state is associated with a first timing advance group identifier, a second transmission configuration indicator state is associated with a second timing advance group identifier different than the first timing advance group identifier, and the second slot is succeeding and adjacent to the first slot; and
based upon the determining, block scheduling and expecting of at least one uplink transmission at least one of at least one uplink transmission in the first slot or at least one uplink transmission in a second slot.

9. The apparatus of claim 8, wherein at least one of:
the first timing advance group identifier is associated with a first timing advance value, and the second timing advance group identifier is associated with a second timing advance value different than the first timing advance value; and
the second timing advance value is larger than the first timing advance value.

10. The apparatus of any of claims 8-9, wherein the at least one memory and the instructions, when executed by the at least one processor, further cause the apparatus at least to at least one of:
receive, from a network entity, while applying the first transmission configuration indicator state, a beam indication or beam switch indicating that the second transmission configuration indicator state for uplink transmissions is to be applied for the apparatus;
block scheduling and expecting of the at least one uplink transmission in the first slot;
block scheduling and expecting of the at least one uplink transmission in the second slot;
prioritize the reception of at least one uplink transmission in the first slot over the at least one uplink transmission in the second slot;
receive, from a network entity, an indication indicating that the at least one uplink transmission in the first slot is to be prioritized over the least one uplink transmission in the second slot;
prioritize the reception of at least one uplink transmission in the second slot over the at least one uplink transmission in the first slot; and
receive, from a network entity, an indication indicating that the at least one uplink transmission in the second slot is to be prioritized over the uplink transmission in the first slot.

11. The apparatus of any of claims 8-10, wherein the at least one memory and the instructions, when executed by the at least one processor, further cause the apparatus at least to:
determine that a first panel of the apparatus associated with the first transmission configuration indicator state is different than a second panel of the apparatus associated with the second transmission configuration indicator state; and
based on the determining, receive the transmission of both the at least one uplink transmission in the first slot and the at least one uplink transmission in the second slot.

12. The apparatus of any of claims 8-11, wherein the at least one memory and the instructions, when executed by the at least one processor, further cause the apparatus at least to:
determine a capability value index associated with a downlink reference signal corresponding to the first transmission configuration indicator state is different than a capability value index associated with a downlink reference signal corresponding to the second transmission configuration indicator state; and
based on the determining, receive the transmission of both the at least one uplink transmission in the first slot and the at least one uplink transmissions in the second slot.

13. The apparatus of any of claims 8-12, wherein the at least one uplink transmission in the first slot comprises at least one of a physical uplink shared channel, a physical uplink control channel, or a sounding reference signal and/or the at least one uplink transmission in the second slot comprises at least one of a physical uplink shared channel, a physical uplink control channel, or a sounding reference signal.

14. A method comprising:
determining, by a user equipment, that a first transmission configuration indicator state is to be applied in a first slot and a second transmission configuration indicator state is to be applied in a second slot, wherein the first transmission configuration indicator state is associated with a first timing advance group identifier, a second transmission configuration indicator state is associated with a second timing advance group identifier different than the first timing advance group identifier, and the second slot is succeeding and adjacent to the first slot; and
based upon the determining, transmitting or dropping at least one of at least one uplink transmission in the first slot or at least one uplink transmission in a second slot.

15. A method comprising:
determining, by a network entity, that a first transmission configuration indicator state is to be applied in a first slot and a second transmission configuration indicator state is to be applied in a second slot, wherein the first transmission configuration indicator state is associated with a first timing advance group identifier, a second transmission configuration indicator state is associated with a second timing advance group identifier different than the first timing advance group identifier, and the second slot is succeeding and adjacent to the first slot; and
based upon the determining, blocking scheduling of and expecting of at least one uplink transmission at least one of at least one uplink transmission in the first slot or at least one uplink transmission in a second slot.
